# EUROPÄISCHE PATENTSCHRIFT

(11) **EP 0 374 558 B1**
(45) Veröffentlichungstag und Bekanntmachung des Hinweises auf die Patenterteilung: **19.01.1994**
(21) Anmeldenummer: 89122282.0
(22) Anmeldetag: 02.12.1989
(51) Int. Cl.: B29C 67/22, B05C 5/00, B29C 31/04

(54) **Verfahren und Vorrichtung zum gleichmässigen Verteilen eines fliessfähigen Reaktionsgemisches auf einer kontinuierlich transportierten Unterlage über die gewünschte Breite bei der Herstellung von Schaumstoffbahnen**
Method and apparatus for evenly distributing a flowing reactive mixture over a given width of a continuously moving substrate during the production of foam sheets
Procédé et dispositif pour étendre régulièrement un mélange réactif coulable sur une largeur donnée d'un substrat en mouvement continu pendant la fabrication de feuilles de mousse

(30) Priorität: 17.12.1988 DE 3842625
(43) Veröffentlichungstag der Anmeldung: 27.06.1990
(73) Patentinhaber: BAYER AG, 51368 Leverkusen (DE)
(72) Erfinder: Krippl, Kurt, D-4019 Monheim (DE)

(56) Entgegenhaltungen:
- DE-A- 1 778 951
- DE-B- 1 296 791
- FR-A- 2 121 520
- NL-A- 6 608 488

## Beschreibung

Die Erfindung betrifft ein Verfahren und eine Vorrichtung zum gleichmäßigen Verteilen eines fließfähigen Reaktionsgemisches auf einer kontinuierlich transportierten Unterlage über die gewünschte Breite bei der Herstellung von Schaumstoffbahnen, wobei die Verteilung von einer punktförmigen Aufgabestelle mittels eines Luftstromes zu den Seiten hin erfolgt.

Die einfachste Art und Weise des Gemischauftrages ist die mittige Aufgabe auf eine wandernde Unterlage, in der Regel eine auf dem Transportband mitgeführte Papierbahn, um das Anhaften des Reaktionsgemisches zu vermeiden und das Reaktionsgemisch einfach breitlaufen zu lassen. Daß der sich ausbildende Reaktionsgemischfilm ungleichmäßig stark ist, liegt auf der Hand. Diese Unterschiede gleichen sich zwar während des Aufschäumens etwas aus; dadurch wird jedoch die Zellstruktur gestört.

Man hat deshalb schon Kalibrierwalzen verwendet. Diese lassen sich aber wirtschaftlich nur bei der Herstellung von beidseitig mit Deckschichten versehenen Schaumstoffbahnen einsetzen, weil die Kalibrierwalze mit dem Reaktionsgemisch nicht in Berührung kommen darf, damit sie nicht verschmutzt. Da sich vor der Kalibrierwalze ein Wulst aus Reaktionsgemisch bilden muß, sind die Verweilzeiten relativ hoch.

Deshalb hat man auch schon versucht (DE-A1-1 778 951), den Wulst zusätzlich durch aus Blasdüsen austretende Luftstrahlen schneller zu den Seiten hin zu verteilen, um die Verweilzeit zu verkürzen. Aber auch diese Maßnahme ist unbefriedigend, weil die Luftströme nahezu senkrecht auf den Gemischfilm auftreffen und im Auftreffpunkt das Gemisch fast völlig nach den Seiten verteilen.

Aus DE-A1-1 296 791 und DE-B2-2 101 238 ist es bekannt, über die Breite der Unterlage einen Luftkasten mit einer porösen Platte anzuordnen, aus welcher ein gegen den Gemischfilm gerichtetes Luftstromfeld austritt. Bei Verwendung eines solchen Luftkastens ist der Verteilungsgrad gering, weil eine querverteilende Strömung fehlt.

Es besteht die Aufgabe, die Verteilung des Reaktionsgemisches hinsichtlich der Erzielung eines gleichmäßig starken Gemischfilmes bei engem Verweilzeitspektrum zu verbessern.

Diese Aufgabe wird dadurch gelöst, daß der Luftstrom mittels Ventilatorwalzen direkt über dem auf der Unterlage transportierten Reaktionsgemisch erzeugt wird und daß die Geschwindigkeit dieses Luftstromes von der Aufgabestelle zu den Seiten der Unterlage abnimmt.

Dadurch wird erreicht, daß der erzeugte Luftstrom flächenartig auf das Reaktionsgemisch einwirkt und damit eine besonders gleichmäßige Verteilung in Form eines geschlossenen Strömungsfeldes schräg nach außen zu bewirkt. Das Verweilzeitspektrum wird durch diese Verfahrensweise eng gehalten, wodurch die Homogenität des Schaumstoffes verbessert wird.

Die Vorrichtung zum gleichmäßigen Verteilen eines fließfähigen Reaktionsgemisches auf einer kontinuierlich transportierten Unterlage über die gewünschte Breite bei der Herstellung von Schaumstoffbahnen ist in Förderrichtung hinter einer Aufgabevorrichtung über dem Obertrum eines endlosen Transportbandes stationär angeordnet.

Das Neue ist in zwei quer zur Förderrichtung des Transportbandes spiegelbildlich angeordneten, antriebsmäßig gekoppelten Ventilatorwalzen zu sehen, deren Durchmesser von der Gemischaufgabestelle nach den Seiten zu abnimmt.

Die Oberfläche der Ventilatorwalzen kann glatt sein. Rillen, Rippen oder Flügel, insbesondere wenn sie gerichtet sind, erhohen die Intensität bzw. Querverteilungswirkung des Luftstromes. Auf eine zusätzliche Kalibrierwalze kann verzichtet werden, so daß die neue Vorrichtung nicht nur bei Doppeltransportbandanlagen, sondern auch für Blockschäumanlagen rationell einsetzbar ist. Die Ventilatorwalzen sind in ihrer Drehrichtung so eingestellt, daß sie in dem mit der Unterlage bzw. dem Transportband gebildeten Spalt mit der Förderrichtung des Transportbandes übereinstimmen. Auf diese Weise "saugt" die durch die Ventilatorwalzen erzeugte Luftströmung das Reaktionsgemisch an und fördert es infolge der höheren Umfangsgeschwindigkeit von der Aufgabestelle zu den Seiten hin. Auch über die Drehzahl der Ventilatorwalzen läßt sich die Intensität der Luftströmung variieren. Es versteht sich, daß die Ventilatorwalzen nicht in das Reaktionsgemisch eintauchen dürfen; d.h., der Abstand von Unterlage und Ventilatorwalze muß überall größer sein als der Gemischauftrag an seiner dicksten Stelle, d.h. an bzw. hinter der Gemischaufgabestelle.

Vorzugsweise sind die Ventilatorwalzen senkrecht zum Transportband schwenkbar gelagert.

Gemäß einer weiteren besonderen Ausführungsform sind die Ventilatorwalzen parallel zum Transportband schwenkbar gelagert.

Hierdurch läßt sich die Querverteilung ebenfalls beeinflussen.

Eine weitere besondere Ausführungsform ist dadurch gekennzeichnet, daß die Ventilatorwalzen höhenverstellbar gelagert sind.

Dadurch läßt sich die Spaltweite zwischen Unterlage und Ventilatorwalzen einstellen.

Vorzugsweise ist der Abstand der Ventilatorwalzen von der Gemischaufgabestelle einstellbar.

Auf diese Weise ist es möglich, die Gemischverteilung dadurch zu optimieren, daß der aufgegebene Reaktionsgemischstrahl sich bereits genügend nach den Seiten ausgebreitet hat, bevor der sich bildende Gemischfilm in den Bereich der Luftströmung gelangt. Eine andere Einstellung des Abstandes kann erforderlich werden, wenn die Transportbandgeschwindigkeit verändert wird.

Es versteht sich, daß die Ventilatorwalzen in vorteilhafter Weise austauschbar sind. Je nach den Erfordernissen kann man ein Walzenpaar geeigneten Durchmessers oder geeigneter Mantelstruktur wählen. In der Regel ist die Mantelstruktur kegelstumpfförmig; aber auch rotationssymmetrische Hyperbel- oder Parabelstruktur kann vorteilhaft sein.

In der Zeichnung ist die neue Verteilvorrichtung in zwei Ausführungsbeispielen rein schematisch dargestellt und nachstehend naher erläutert. Es zeigen:
- Fig. 1: die Verteilvorrichtung gemäß erstem Ausführungsbeispiel in der Draufsicht,
- Fig. 2: einen Schnitt gemaß Linie A-B in Fig. 1,
- Fig. 3: die Verteilvorrichtung gemäß einem zweiten Ausführungsbeispiel in der Draufsicht,
- Fig. 4: einen Schnitt gemäß Linie C-D in Fig. 3 und
- Fig. 5, 6: besondere Ausführungsformen von Ventilatorwalzen.

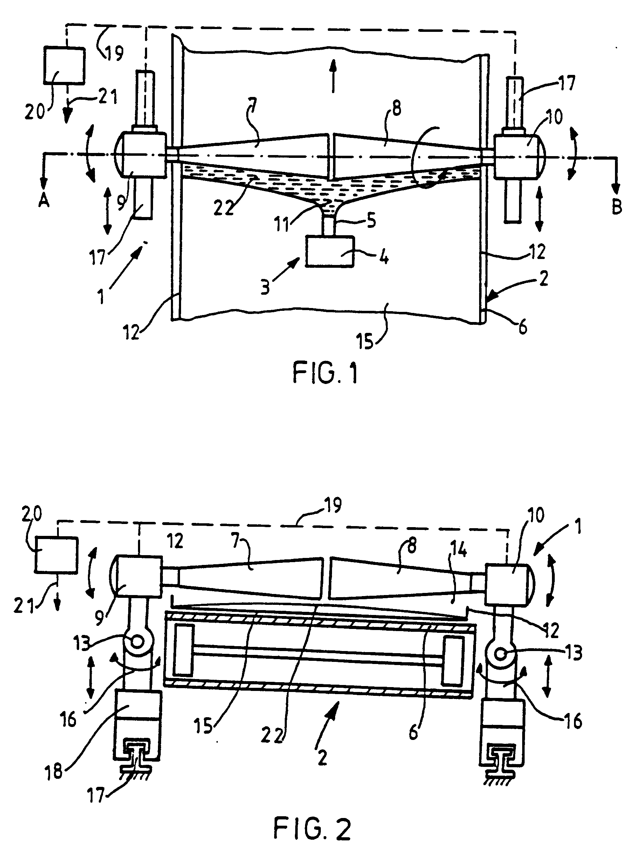

In Fig. 1, 2 ist die Vorrichtung 1 zum gleichmäßigen Verteilen des Reaktionsgemisches einem Doppeltransportband zugeordnet, von welchem nur das untere Transportband 2 sowie die Gemischaufgabevorrichtung 3, welche aus einem Mischkopf 4 mit Auslaufrohr 5 besteht, dargestellt sind. Dieser Mischkopf 4 mit seinem Auslaufrohr 5 ist fix und mittig über dem Obertrum 6 des Transportbandes 2 angeordnet. Die Vorrichtung 1 besteht aus zwei spiegelbildlich gestalteten und symmetrisch angeordneten Ventilatorwalzen 7, 8 mit glatter Oberfläche, denen Antriebe 9, 10 zugeordnet sind. Diese Ventilatorwalzen 7, 8 sind austauschbar und haben in der Verlängerung der Gemischaufgabestelle 11 ihren größten Durchmesser, welcher sich zu den Begrenzungen 12 für die Schäumbreite kegelstumpfförmig verringert. Die Antriebe 9, 10 sind um Achsen 13 in der senkrechten Ebene quer zum Transportband 2 schwenkbar gelagert, so daß der Öffnungswinkel des Spaltes 14 zwischen den Ventilatorwalzen 7, 8 und der auf dem Transportband 2 transportierten Papierdeckschicht 15 den Erfordernissen entsprechend einstellbar ist. Die Ventilatorwalzen 7, 8 sind außerdem höhenverstellbar gelagert, indem die Antriebe 9, 10 auf höhenverstellbaren Stützen 16 angeordnet sind. Diese sind auf auf Schienen 17 langsverschiebbaren Blöcken 18 gelagert, damit der Abstand der Ventilatorwalzen 7, 8 von der Aufgabestelle 11 wählbar ist. Schließlich sind die Stützen 16 auch noch um ihre Achsen schwenkbar gelagert, so daß die Ventilatorwalzen 7, 8 parallel zum Obertrum 6 des Transportbandes 2 schwenkbar sind. Die Antriebe 7, 8 sind über eine Impulsleitung 19 mit einem Drehzahlregler 20 gekoppelt, 50 daß sie gleiche Umdrehungszahl aufweisen. Der Drehzahlregler 20 ist andererseits mit dem nicht dargestellten Antrieb des Transportbandes 2 über eine Impulsleitung 21 gekoppelt, so daß bei Veränderungen der Fördergeschwindigkeit des Transportbandes 2 die Drehzahl der Ventilatorwalzen 7, 8 in einem festen Verhältnis gleichzeitig geändert wird. Das sich verteilende Reaktionsgemisch ist mit 22 bezeichnet.

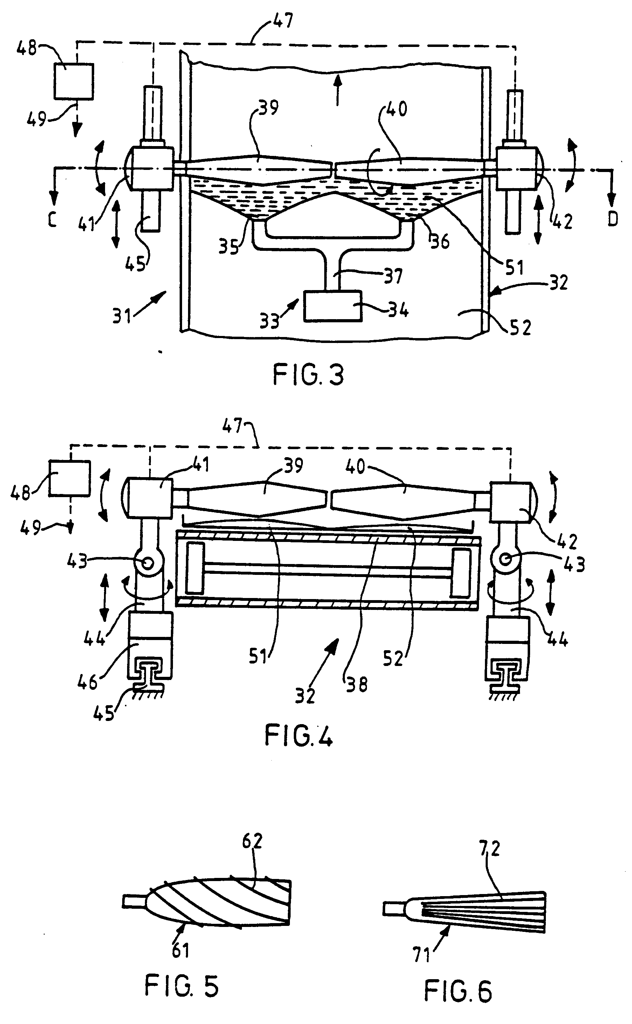

In Fig. 3, 4 ist die Vorrichtung 31 zum gleichmäßigen Verteilen des Reaktionsgemisches einem Doppeltransportband zugeordnet, von welchem nur das untere Transportband 32 sowie die Gemischaufgabevorrichtung 33, welche aus einem Mischkopf 34 und einem sich zu zwei Aufgabestellen 35, 36 verzweigenden Auslaufrohr 37 besteht, dargestellt sind. Dieser Mischkopf 34 ist mittig über dem Obertrum 38 des Transportbandes 32 angeordnet. Die Vorrichtung 31 besteht aus zwei spiegelbildlich gestalteten und symmetrisch angeordneten Ventilatorwalzen 39, 40 mit glatter Oberfläche, denen Antriebe 41, 42 zugeordnet sind. Diese Ventilatorwalzen 39, 40 sind austauschbar. Sie haben in der Verlängerung der Gemischaufgabestellen 35, 36 ihre größten Durchmesser und verjüngen sich nach beiden Seiten kegelstumpfförmig. Die Antriebe 41, 42 sind um Achsen 43 in der senkrechten Ebene quer zum Transportband 32 schwenkbar gelagert, so daß der Winkel zwischen Ventilatorwalzen 39, 40 und Obertrum 38 einstellbar ist. Die Ventilatorwalzen 39, 40 sind außerdem höhenverstellbar gelagert, indem die Antriebe 41, 42 auf höhenverstellbaren Stützen 44 angeordnet sind. Diese sind auf auf Schienen 45 längsverschiebbaren Blöcken 46 gelagert, so daß die Ventilatorwalzen 39, 40 parallel zum Obertrum 38 des Transportbandes 32 schwenkbar sind. Die Antriebe 41, 42 sind über Impulsleitungen 47 mit einem Drehzahlregler 48 gekoppelt, so daß sie die gleiche Umdrehungszahl aufweisen. Der Drehzahlregler 48 ist andererseits mit einem nicht dargestellten Antrieb des Transportbandes 32 über eine Impulsleitung 49 gekoppelt, so daß bei Veränderungen der Fördergeschwindigkeit des Transportbandes 32 die Drehzahl der Ventilatorwalzen 39, 40 in einem festen Verhältnis gleichzeitig geändert wird. Das sich auf der auf dem Obertrum 38 geförderten Papierdeckschicht 52 ausbreitende Reaktionsgemisch ist mit 51 bezeichnet.

In Fig. 5 ist die Ventilatorwalze 61 paraboloidförmig gestaltet und weist gewindeartige Flügel 62 auf.

In Fig. 6 ist die Ventilatorwalze 71 hyperboloidförmig gestaltet und weist radiale Flügel 72 auf.

## Patentansprüche

1. Verfahren zum gleichmäßigen Verteilen eines fließfähigen Reaktionsgemisches (22; 51) auf einer kontinuierlich transportierten Unterlage (15; 52) über die gewünschte Breite bei der Herstellung von Schaumstoffbahnen, wobei die Verteilung von einer punktförmigen Aufgabestelle (11; 35; 36) mittels eines Luftstromes erfolgt, dadurch gekennzeichnet, daß der Luftstrom mittels Ventilatorwalzen (7, 8; 39, 40; 61; 71) direkt über dem auf der Unterlage (15; 52) transportierten Reaktonsgemisch (22; 51) erzeugt wird und daß die Geschwindigkeit dieses Luftstromes von der Aufgabestelle (11; 35; 36) zu den Seiten der Unterlage abnimmt.

2. Vorrichtung (1; 31) zum gleichmäßigen Verteilen eines fließfähigen Reaktionsgemisches (22; 51) auf einer kontinuierlich transportierten Unterlage (15; 50) über die gewünschte Breite bei der Herstellung von Schaumstoffbahnen, wobei diese Vorrichtung in Förderrichtung hinter einer Aufgabevorrichtung (3; 33) über dem Obertrum (6; 38) eines endlosen Transportbandes (2; 32) stationär angeordnet ist, gekennzeichnet durch zwei quer zur Förderrichtung des Transportbandes (2; 32) spiegelbildlich angeordnete, antriebsmäßig gekoppelte Ventilatorwalzen (7, 8; 39, 40; 61; 71), deren Durchmesser von der Gemischaufgabestelle (11; 35, 36) nach den Seiten zu abnimmt.

3. Vorrichtung (1; 31) nach Anspruch 2, dadurch gekennzeichnet, daß die Ventilatorwalzen (7, 8; 39, 40) senkrecht zum Transportband (2; 32) schwenkbar gelagert sind.

## Claims

1. Process for evenly distributing a free-flowing reaction mixture (22; 51) over a given width of a continuously moving substrate (15; 52) in the production of foam webs, wherein distribution from a feed point (11; 35; 36) proceeds by means of a stream of air, characterised in that the stream of air is produced by means of fan rollers (7, 8; 39, 40; 61; 71) directly above the reaction mixture (22; 51) conveyed on the substrate (15; 52) and that the velocity of this stream of air decreases from the feed point (11; 35; 36) to the edges of the substrate.

2. Device (1; 31) for evenly distributing a free-flowing reaction mixture (22; 51) over a given width of a continuously moving substrate (15; 50) in the production of foam webs, wherein this device is stationarily arranged downstream in the conveying direction from a feed device (3; 33) over the upper run (6; 38) of a continuous conveyor belt (2; 32), characterised by two mirror-inverted fan rollers (7, 8; 39, 40; 61; 71) arranged transversely in relation to the conveying direction of the conveyor belt (2; 32), the diameter of which rollers decreases from the mixture feed point (11; 35, 36) to the sides.

3. Device (1; 31) according to claim 2, characterised in that the fan rollers (7, 8; 39, 40) are pivoted vertically in relation to the conveyor belt (2; 32).

## Revendications

1. Procédé pour la répartition uniforme d'un mélange réactionnel (22; 51) apte à l'écoulement sur un substrat (15; 52) transporté en continu sur la largeur désirée lors de la préparation de bandes en mousse, la répartition ayant lieu à partir d'un poste d'alimentation ponctuel (11; 35, 36) au moyen d'un courant d'air, caractérisé en ce que le courant d'air est généré au moyen de tambours à ventilateurs (7, 8; 39, 40; 61; 71) directement au-dessus du mélange réactionnel (22: 51) transporté sur le substrat (15; 52) et en ce que la vitesse de ce courant d'air diminue depuis le poste d'alimentation (11; 35, 36) en direction des côtés du substrat.

2. Dispositif (1; 31) pour la répartition uniforme d'un mélange réactionnel (22; 51) apte à l'écoulement sur un substrat (15; 50) transporté en continu sur la largeur désirée lors de la préparation de bandes en mousse, ce dispositif étant agencé de manière stationnaire derrière un dispositif d'alimentation (3; 33) au-dessus du brin supérieur (6; 38) d'une bande transporteuse sans fin (2; 32), caractérisé par deux tambours à ventilateurs couplés en entraînement (7, 8, 39, 40; 61; 71) et disposés de manière spéculaire transversalement par rapport à la direction de transport de la bande transporteuse (2; 32), dont le diamètre diminue depuis le poste d'alimentation de mélange (11; 35, 36) en direction des côtés.

3. Dispositif (1; 31) selon la revendication 2, caractérisé en ce que les tambours à ventilateurs (7, 8; 39, 40) sont montés en pivotement perpendiculairement à la bande transporteuse (2, 32).
